# EUROPÄISCHE PATENTSCHRIFT

(11) **EP 0 510 137 B1**
(45) Veröffentlichungstag und Bekanntmachung des Hinweises auf die Patenterteilung: **17.05.1995**
(21) Anmeldenummer: 91918310.3
(22) Anmeldetag: 17.10.1991
(51) Int. Cl.: G01B 11/02, G01B 11/24

(54) **OPTISCH-ELEKTRISCHES MESSVERFAHREN ZUR BESTIMMUNG VON QUERSCHNITTSABMESSUNGEN INSBESONDERE STRANGARTIGER GEGENSTÄNDE MIT BEZUG AUF MINDESTENS EINE AN DEN QUERSCHNITTSUMFANG GELEGTE, DIESEN IN MINDESTENS ZWEI PUNKTEN BERÜHRENDE GERADE UND EINRICHTUNG ZUR DURCHFÜHRUNG DES VERFAHRENS**
OPTO-ELECTRICAL MEASURING PROCESS FOR DETERMINING CROSS-SECTIONAL DIMENSIONS ESPECIALLY OF ELONGATED OBJECTS WITH REFERENCE TO AT LEAST ONE STRAIGHT LINE AT THE CROSS-SECTIONAL PERIPHERY TOUCHING IT AT AT LEAST TWO POINTS, AND DEVICE FOR IMPLEMENTING THE PROCESS
PROCEDE ET DISPOSITIF DE MESURE OPTO-ELECTRIQUE SERVANT A DETERMINER LES DIMENSIONS DE LA SECTION TRANSVERSALE D'OBJETS NOTAMMENT ALLONGES PAR RAPPORT A AU MOINS UNE LIGNE DROITE TRACEE A LA PERIPHERIE DE LA SECTION TRANSVERSALE, TOUCHANT CELLE-CI EN AU MOINS DEUX POINTS

(30) Priorität: 12.11.1990 DE 4035977
(43) Veröffentlichungstag der Anmeldung: 28.10.1992
(73) Patentinhaber: DIPL.-ING. BRUNO RICHTER GmbH & CO. ELEKTRONISCHE BETRIEBSKONTROLL-GERÄTE KG, D-96135 Stegaurach (DE)
(72) Erfinder: RICHTER, Bruno, D-8602 Stegaurach-Debring (DE)
(74) Vertreter: Dorner, Jörg, Dr.-Ing.
(86) Internationale Anmeldenummer: EP9101978
(87) Internationale Veröffentlichungsnummer: WO9208948

(56) Entgegenhaltungen:
- EP-A- 0 078 741
- EP-A- 0 364 907
- US-A- 4 432 648
- PATENT ABSTRACTS OF JAPAN vol. 8, no. 121 (P-278)(1558) 7. Juni 1984 & JP-A-59 027 210
- PATENT ABSTRACTS OF JAPAN vol. 5, no. 191 (P-92)(863) 5. Dezember 1981 & JP-A-56 117 107
- PATENT ABSTRACTS OF JAPAN vol. 6, no. 18 (P-100)(896) 2. Februar 1982 & JP-A-56 141 528

## Beschreibung

Die Erfindung betrifft ein optisch-elektrisches Meßverfahren, bei dem Querschnittsabmessungen insbesondere strangartiger Gegenstände in geometrischer Analogie zur bekannten Arbeitsweise mechanischer Tiefenmeßzeuge der Abstand eines zu vermessenden Punktes am Querschnittsumfang zu einer Bezugsgeraden ermittelt wird, welche den Querschnittsumfang in mindestens zwei voneinander beabstandeten Punkten berührt wobei durch Verschwenken des gesamten Meßsystems ein innerhalb eines Meßfeldes im Sinne einer Parallelverschiebung bewegter Lichtstrahl an einer meßbaren Stelle dieser Bewewegung, und in einer erkennbaren Schwenklage des Meßsystems an den mindestens zwei die Bezugsgerade bestimmenden Punkten des Querschnittsumfanges diesen berührt, und der Abstand des zu vermessenden Punktes von der Achse des Lichtstrahles in dieser Berührungslage ermittelt wird.

Ein Verfahren dieser Art wird in der DE-A-32 19 389 vorgeschlagen und eine Einrichtung zur Durchfürung des Verfahrens beschrieben. In Anwendung dieser Einrichtung ist es beispielsweise möglich, den Weg des in Parallelverschiebung durch das Meßfeld bewegten Lichtstrahles von seinem Eintritt in das Gebiet der Abschattung durch den im Meßfeld befindlichen Gegenstand bis zu seinem Wiederaustritt aus diesem Gebiet in einer solchen Verschwenkungslage des gesamten Meßsystems zu messen, bei der der aus dem Abschattungs-Gebiet wieder austretende Lichtstrahl an mindestens zwei eine Bezugsgerade bestimmenden Punkten den Querschnittsumfang des Gegenstandes berührt. Es können in dieser Weise zum Beispiel an einem **L**-Profil die Breite des jeweils einen Schenkels als senkrechter Abstand seiner End-Mantellinie zur Außenfläche des jeweils anderen Schenkels, oder die Höhe eines **T**-Profils gemessen werden. Dieses bekannte Meßverfahren ermöglicht Messungen der vorgenannten Art jedoch nur dann, wenn sowohl der zu vermessende Punkt als auch die die Bezugsgerade bestimmenden Punkte des Querschnittsumfanges die Grenzen des Abschattungs-Gebietes bilden.

Die vollständige Vermessung von **L**-, **T**-, **C**-, oder **I**- Profilen oder ähnlich geformter strangartiger Produktionsgüter erfordert jedoch auch die Messung von Schenkeldicken, Flanschdicken, Stegdicken und Flanschtiefen, wobei aber Endpunkte der jeweils zu vermesenden Strecke oder Punkte der Bezugsgeraden in allen Schwenklagen des Meßsystems so zu liegen kommen, daß sie von anderen Teilen des Querschnittsumfanges in der Schattenprojektion im parallelen oder parallel abgetastenden Licht überdeckt werden und deshalb die Grenzen des Abschattungs-Gebietes nicht bilden können. Dadurch ist die Vermessung dieser Profilformen nur unvollständig mit dem bekannten Verfahren durchführbar.Die Erfindung soll die Aufgabe lösen, auch solche strangförmigen Produktionsgüter in ihrer Querschnittsabmessung zu vermessen, bei welchen die Endpunkte einer zu vermessenden Strecke und die eine zu dieser Strecke senkrechte Bezugsgerade bildenden Punkte am Querschnittsumfang nicht gleichzeitig durch eine Schattenprojektion in parallelem Licht darstellbar sind.

Diese Aufgabe wird erfindungsgemäß dadurch gelöst, daß die Abtastung der auf der Bezugsgerade liegenden Punkte des Querschnittsumfanges mit einem im Sinne einer Parallelverschiebung durch das Meßfeld bewegten Lichtstrahl bei dessen zur Bezugsgeraden paralleler Ausrichtung vorgenommen wird und die Messung der zu prüfenden Querschnittsdemension senkrecht zur Bezugsgeraden mit einem nach dem Triangulationsprinzip arbeitenden Auflichtverfahren durchgeführt wird, dessen Lichtwege im wesentlichen quer zu dem die Punkte der Bezugsgeraden erfassenden Lichtstrahl verlaufen.

Hierzu dient gemäß einer vorteilhaften Ausführungsform eine Meßeinrichtung, bei welcher auf einer Schwenkhalterung, die um den zu untersuchenden Gegenstand herum verschwenkbar gelagert und motorisch antreibbar ist, auf einer Seite des Meßfeldes ein Scanner für die Erzeugung eines im Sinne einer Parallelverschiebung in schneller Folge durch das Meßfeld bewegten Lichtstrahles, auf der anderen Seite des Meßfeldese ein optisch-elektrischer Empfänger zum Empfang des vom Scanner erzeugten Lichtstrahls für die von dessen Abschattung abhängige Erzeugung elektrischer Signale, und ein mit seiner Wirkungsachse den vom Scanner erzeugten Lichtstrahl im Meßfeld kreuzender optischer-elektrischer Abstandssensor mit einer den Gegenstand unter einer bestimmten Richtung punktförmig beleuchtenden Lichtquelle sowie mit einer den beleuchteten Punkt unter einer anderen Richtung auf ein positionsdetektierendes optisch-elektrisches Empfangselement abbildenden Optik angeordnet sind, wobei die räumliche Lage des Abstandssensors mit Bezug auf den Scanner unveränderlich ist oder von diesem abgetastet wird.

In dieser so ausgestalteten Meßeinrichtung enthält der Scanner vorzugsweise eine Lichtquelle für einen scharf gebündelten Lichtstrahl, der von einem durch einen Motor angetriebenen Drehspiegel in eine Schwenkbewegung und aus dieser durch Kollimationsmittel in eine Parallelverschiebungs-Bewegung gelenkt wird, wobei zur Ermittlung von Bewegungsstrecken dieser Bewegung in einem Impulsgenerator zählbare Impulse erzeugt werden, deren Frequenz mittels Regelkreisen proportional zur augenblicklichen Bewegungsgeschwindigkeit des Lichtstrahls im Meßfeld gehalten wird. Der optisch-elektrische Empfänger zum Empfang des vom Scanner ausgehenden parallel bewegten Lichtstrahls enthält in dieser Meßeinrichtung vorzugsweise ein optisches Fokussierungsmittel und einen Detektor zur Erzeugung der von dem empfangenen Lichtstrahl oder seiner Abschattung durch den Gegenstand abhängigen elektrischen Signale. Der Scanner und der Empfänger dieser Meßeinrichtung in der aufeinander ausgerichteten Anordnung sind an sich aus der DE-C-28 49 252 bekannt. Erfindungsgemäß ist in dieser Meßeinrichtung der vom parallel bewegten Lichtstrahl des Scanners abtastbare Abstandssensor so angeordnet, daß seine Wirkungsachse in Richtung der Bewegung dieses Lichtstrahles und auf diesen senkrecht orientiert ist, wobei gemäß einer ersten, an sich bekannten Ausführung der Abstandssensor eine weitere Lichtquelle für die Aussendung eines scharf gebündelten Lichtstrahles in der Wirkungsachse des Abstandssensors auf den Gegenstand im Meßfeld, eine Optik zur Abbildung des von diesem Lichtstrahl beleuchteten Punktes auf dem Gegenstand unter einem bestimmten Winkel zur Wirkungsachse auf einen CCD-Zeilensensor, sowie eine diesem Zeilensensor nachgeschaltete Elektronik zur Erzeugung von elektrischen Signalen in Abhängigkeit von der Lage des Punkt-Abbildes innerhalb der Bildfläche enthält.

Eine so ausgestaltete Meßeinrichtung erlaubt es, unter Einbezug der vom Lichtstrahl des Scanners erfaßten räumlichen Distanz zwischen dem Abstandssensor und dem Scanner in Meßrichtung, den Abstand zwischen dem vom Lichtstrahl des Abstandssensors beleuchteten Punkt und dem Lichtstrahl des Scanners an einer bestimmten Grenze der Abschattung durch den Gegenstand, beispielsweise am ersten Hell-Dunkel-Übergang während einer Parallel-Bewegung durch das Meßfeld, zu ermitteln, den Verlauf des ermittelten Abstandes in Abhängigkeit von der Schwenklage der motorisch angetriebenen Schwenkhalterung zu erfassen, und bei der für die zur Bezugsgeraden parallele Ausrichtung des bewegten Lichtstrahles charakteristischen Unstetigkeit des erfaßten Abstandes-Verlaufes, beispielsweise bei einem bestimmten Minimum, den ermittelten Abstand als das Maß der zu vermessenden Strecke am Querschnitt des Gegenstandes zu bestimmen.

Gemäß einer anderen Ausführungsform der Meßeinrichtung zur Durchführung des vorgeschlagenen Meßverfahrens ist im Abstandssensor die Achse der Optik zur Abbildung des beleuchteten Punktes so ausgerichtet, daß sie identisch mit der Wirkungsachse des Abstandssensors ist, und wird der den Punkt beleuchtende Lichtstrahl vermittels eines weiteren Scanners im Sinne einer Parallelverschiebung unter einem Winkel, der von dem der Wirkungsachse abweicht, über die Oberfläche des Gegenstandes im Meßfeld bewegt, wobei das Zusammentreffen des Abbildes des beleuchteten Punktes mit der Achse der Abbildungs-Optik und das Zusammentreffen des beleuchtenden Lichtstrahles mit einer bestimmten Bezugsposition jeweils vermittels eines zweiteiligen Detektors in der Bildebene beziehungsweise an einem die Bezugsposition bestimmenden Ort in einer an sich aus der DE-C-35 03 086 bekannten Verfahrensweise durch Vergleich der Teilsignale des jeweiligen zweiteiligen Detektors feststellbar ist, und der virtuelle Parallelverschiebungs-Weg des beleuchtenden Lichtstrahls zwischen beiden Zusammentreffen in Richtung der Achse der Abbildungs-Optik als Maß des Abstandes der Gegenstands-Oberfläche bestimmt wird. Hierfür werden zählbare Impulse in einem weiteren Impulsgenerator erzeugt, deren Frequenz mittels Regelkreisen proportional zur augenblicklichen Bewegungsgeschwindigkeit des beleuchtenden Lichtstrahles gehalten wird, wie es aus der DE-C-28 49 252 an sich bekannt ist.

Bei einer derartigen Ausführungsform der Meßeinrichtung sind Einflüsse des begrenzten Auflösungsvermögens eines CCD-Zeilensensors ausgeschlossen und es wird eine weitgehende Unabhängigkeit der Abstandsmessung vom Reflexionsverhalten der Gegenstands-Oberfläche erreicht. In der Praxis zeigt sich jedoch bei beiden vorgenannten Ausführungsformen, daß bei ungünstiger Schwenklage des Meßsystems und bei ungünstigem Reflektionsverhalten der Gegenstands-Oberfläche der Lichtstrahl des die Bezugsgerade bestimmenden Teilsystemes oder der Lichtstrahl des den Abstand erfassenden Teilsystemes zum Detektor - des jeweils anderen Teilsystemes umgelenkt wird und die Messung stört. Zur Vermeidung dieser Störung sind beide Abtastvorgänge unter Verwendung bekannter Phasenregelkreise in einer solchen Phasenlage synchronisiert, daß sie im Wechsel und ohne zeitliche Überlagerung ablaufen.

In einer bevorzugten Ausführungsform der Meßeinrichtung ist die versetzte Arbeitsweise der Teilsysteme auf optischem Wege unter weitgehender Vereinfachung des Gesamtsystems dadurch erreicht, daß bei Verwendung von nur einem Scanner der von diesem ausgesandte Lichtstrahl mit einem optischen Umlenkmittel auf mindestens einem Teil seines Parallelverschiebungs-Weges umgelenkt wird zur Erfassung des Abstandes in der vorbeschriebenen Weise, und auf dem verbleibenden Teil des Weges zur Bestimmung der Bezugsgeraden die Schattenkontur des Gegenstandes abtastend durch das Meßfeld geführt wird, wobei ein solches optisches Umlenkmittel verwendet ist, beispielweise eine anamorphotische Prismen-Anordnung, daß der von der Wirkungsachse des Abstandssensors und von der Achse des beleuchtenden Lichtstrahls gebildete Kreuzungspunkt sich mit gleicher Geschwindigkeit bewegt wie der die Schattenkontur abtastende Lichtstrahl, oder wobei dem Impulsgenerator für die Erzeugung zählbarer Impulse ein umschaltbarer Frequenzteiler nachgeschaltet ist und dieser beim Übergang des bewegten Lichtstrahles vom Gebiet der Abstands-Erfassung in das Gebiet der Schattenkontur-Abtastung so umgeschaltet wird, daß für die Bewegung des vorgenannten Kreuzungspunktes wie für die Bewegung des die Schattenkontur abtastenden Lichtstrahles gleiche Impulszahlen je zurückgelegter Weg-Einheit am Ausgang des Frequenzteilers entstehen.

Die Verwendung dieser bevorzugten Ausführungsform der Meßeinrichtung gestattet es, im Zeitraum zwischen dem Zusammentreffen des Abbildes des beleuchteten Punktes mit der Achse der Abbildungs-Optik und dem Eintreffen des Lichtstrahles an einer bestimmten Grenze der Abschattung durch den Gegenstand die Impulse vom Impulsgenerator beziehungsweise vom Frequenzteiler einer einzigen Zähleinrichtung zuzufüren und den dort entstandenen Zählwert unter Berücksichtigung eines Versatzwertes als Abstand des beleuchteten Punktes der Gegenstands-Oberfläche in der Wirkungsachse des Abstandssensors zur Lichtstrahl-Achse an der Grenze der Abschattung zu werten.

Weitere vorteilhafte Ausführungsformen sind im übrigen Gegenstand der anliegenden Ansprüche, deren Inhalt hierdurch ausdrücklich zum Bestandteil der Beschreibung gemacht wird, ohne an dieser Stelle den Wortlaut zu wiederholen. Nachfolgend wird die Erfindung anhand von Ausführungsbeispielen unter Bezugnahme auf die Zeichnungen näher erläutert.

Es zeigen
Fig. 1 eine schematische, perspektivische Ansicht einer Meßeinrichtung zur Durchführung des erfindungsgemäßen Verfahrens;
Fig. 2 eine Vorderansicht der Meßeinrichtung nach Fig. 1 mit Darstellung von Einzelheiten einer gewählten Ausführungsform;
Fig. 3 eine Vorderansicht der Meßeinrichtung nach Fig. 1 mit Darstellung von Einzelheiten einer gegenüber Fig. 2 abgewandelten, bevorzugten Ausführungsform;
Fig. 4 eine Vorderansicht der Meßeinrichtung nach Fig. 1 mit Darstellung von Einzelheiten einer gegenüber Fig. 3 erweiterten Ausführungsform.

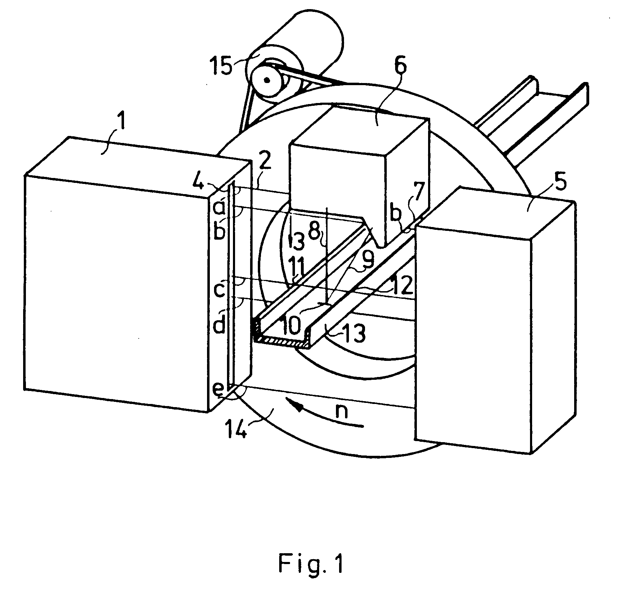

Der in Fig. 1 mit 1 bezeichnete Scanner sendet einen scharf gebündelten Lichtstrahl 2 aus, der sich im Sinne einer Parallelverschiebung durch ein Meßfeld bewegt. Dies ist durch den Pfeil 3 zeichnerisch angedeutet. Das Meßfeld wird in Strahlrichtung durch das Austrittsfenster 4 des Scanners 1 und durch das Eintrittsfenster (4′, wegen der perspektivischen Überdeckung in Fig. 1 nicht sichtbar) eines optischelektrischen Empfängers 5, und in Bewegungsrichtung des Lichtstrahles durch die Öffnungsränder dieser beiden Fenster begrenzt. Der Lichtstrahl 2 tastet die räumliche Lage eines Abstandssensors 6 an dessen in das Meßfeld ragende Gehäusekante 7 ab. Je nach Arbeitsweise des Abstandssensors 6 ist einer der beiden mit ihm verbunden dargestellten optischen Wege, 8 oder 9, identisch mit der Achse eines im Abstandssensors 6 enthaltenen Beleuchtungs-Systems, und der andere, 9 oder 8, identisch mit der Achse eines ebenfalls im Abstandssensor 6 enthaltenen Abbildungs-Systemes. Beide Systeme sind in Fig. 1 wegen der grundsätzlich gegebenen Wahlmöglichkeit der Arbeitsweise des Abstandssensors nicht dargestellt. Der senkrecht zum bewegten Lichtstrahl 2 verlaufende optische Weg 8 ist unabhängig von der Arbeitsweise des Abstandssensors 6 identisch mit dessen Wirkungsachse. In dieser Wirkungsachse werden vom Abstandssensor 6 Abstands-Veränderungen ermittelt, die relativ zum Abstandssensor ein Punkt 10 auf einer Ebene erfährt, die bestimmten Abstand von einer in weiteren Punkten, 11 und 12, vom bewegten Lichtstrahl 2 abgetasteten Oberfläche eines im Meßfeld befindlichen Gegenstandes 13 erfährt. Der bewegte Lichtstrahl 2 ist in solchen Bewegungsphasen dargestellt in denen seine Ausbreitung Veränderungen unterworfen ist. Im einzelnen sind dies in der mit a bezeichneten Position der Eintritt des Lichtstrahles 2 in das Meßfeld bei Bewegung in Richtung des Pfeiles 3, in der mit b bezeichneten Position die vom Empfänger 5 feststellbare Beendigung einer ersten Abschattung durch den Abstandssensor 6 an dessen Gehäusekante 7, in der mit c bezeichneten Position die erneute Abschattung des Lichtstrahles an den Punkten 11 und/oder 12 des Gegenstandes 13, in der mit d bezeichneten Position die Beendigung der Abschattung durch den Gegenstand 13, und in der mit e bezeichneten Position die letzte Abschattung des Lichtstrahles im Bewegungszyklus durch Verlassen des Meßfeldes, wobei auch die Vorgänge in den Positionen c, d und e vom Empfänger 5 feststellbar sind. Der Scanner 1, der optisch elektrische Empfänger 5 und der Abstandssensor 6 sind gemeinsam auf einer Schwenkhalterung 14 montiert und werden von dieser aufgrund eines Antriebes durch einen Motor 15 sowie einer nicht dargestellten schwenkbaren Lagerung kontinuierlich oder intermittierend mit wechselnder oder gleichbleibender Drehrichtung um den im Meßfeld befindlichen zu untersuchenden Gegenstand herum verschwenkt, was durch den Pfeil n zeichnerisch angedeutet ist.

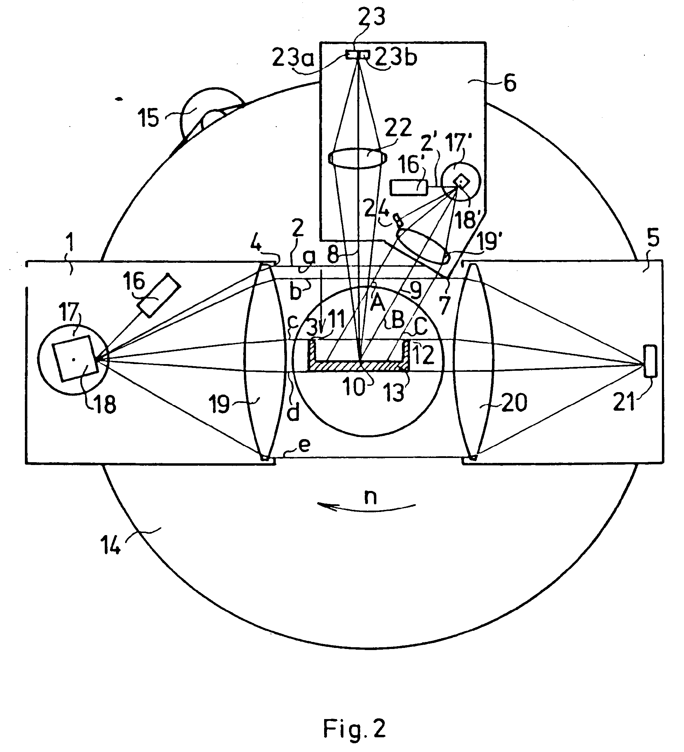

In Figur 2 sind Einzelheiten einer gewählten Ausführungsform der Meßeinrichtung nach Figur 1 gezeigt. Von einer Lichtquelle 16 für die Erzeugung des scharf gebündelten Lichtstrahles 2 ausgehend fällt dieser auf einen Drehspiegel 18, der von einem Motor 17 angetrieben wird und dadurch den Lichtstrahl 2 nach Reflektion schwenkend bewegt. Durch ein Kollimationsmittel 19 wird der schwenkend bewegte Lichtstrahl 2 so umgelenkt, daß er sich im Sinne einer Parallelverschiebung durch das Meßfeld bewegt, was durch den Pfeil 3 zeichnerisch angedeutet ist. Von den Bewegungsphasen des Lichtstrahles 2 sind jene in den Positionen a, b, c, d und e dargestellt, bei denen in vorbeschriebener Zuordnung die Ausbreitung des Lichtstrahles 2 besagten Veränderungen unterliegt. In den abschattungsfreien Bewegungsphasen des Lichtstrahles 2 wird dieser durch ein Fokussierungsmittel 20 im Empfänger 5 auf einen Detektor 21 umgelenkt. Die entsprechend den besagten Veränderungen im Detektor 21 erzeugten Signaländerungen werden in bekannter, nicht dargestellter Weise dazu benutzt, beispielsweise während der Bewegung des Lichtstrahles 2 von Position b bis c einer Impuls-Zähleinrichtung Impulse zuzuführen, die eine der Bewegungsgeschwindigkeit des Lichtstrahles 2 proportionale Frequenz haben. Der Abstandssensor 6 enthält ein scannendes Beleuchtungs-System, dessen Lichtquelle 16, Motor 17′, Drehspiegel 18′ und Kollimationsmittel 19′ in gleicher Weise zusammenwirken wie die entsprechenden Teile des Scanners 1. Der von diesem Beleuchtungs-System bewegte Lichtstrahl 2′ ist in drei Positionen A , B und C seiner Bewegung durch das Meßfeld dargestellt. Es ereignen sich bei Position A der Eintritt des Lichtstrahles 2′ in das Meßfeld, bei Position B sein Zusammentreffen auf der Oberfläche des zu untersuchenden Gegenstandes mit der Achse eines noch zu erläuternden Abbildungs-Systemes, und in Position C sein Ver lassen des Meßfeldes. Die deckungsgleiche Darstellung des Strahles in Position B und des hier mit der Achse des Beleuchtungs-Systemes identischen optischen Weges 9 ist zufällig und ohne Bedeutung. Weiter enthält der Abstandssensor 6 ein Abbildungs-System, bestehend aus einer Abbildungs-Optik 22 , und dessen/deren Achse bei der hier gewählten Arbeitsweise des Abstandssensors 6 mit dessen Wirkungsachse im optischen Weg 8 identisch ist. Diese Abbildungs-Optik 22 bildet die Oberfläche des zu untersuchenden Gegenstandes 13 auf einen Detektor ab, wobei aufgrund der Bewegung des beleuchtenden Lichtstrahles 2′ ein von der Oberfläche gesteuerter Lichtstrom in einem über den Detektor 23 hinweg bewegten Punkt gesammelt wird. Dieser Detektor besitzt zwei lichtempfindliche Teilflächen 23a und 23b, deren vom Lichtstrom bewirkte elektrische Signale getrennt ableitbar sind, und die an einer im wesentlichen quer zur Bewegungsbahn des sich über den Detektor 23 hinweg bewegenden Punktes verlaufenden Linie aneinandergrenzen, wobei der Detektor 23 so angebracht ist, daß sich diese Linie und die vorgenannte Bewegungsbahn in der Achse der Abbildungs-Optik 22 kreuzen. Durch Vergleich der von den Teilflächen 23a und 23b abgeleiteten elektrischen Signale in einer nicht dargestellten elektronischen Schaltung wird bei gleicher Beaufschlagung beider Teilflächen durch den von der Oberfläche des Gegenstandes 13 gesteuerten Lichstrom die Position B des Lichtstrahles 2′ festgestellt, in der dieser auf der Oberfläche die Achse der Abbildungs-Optik 22 kreuzt. Ein weiterer zweiteiliger Detektor 24, angeordnet in einer bestimmten räumlichen Bezugsposition, dient in gleicher Weise zur Feststellung des Eintreffens des Lichtstrahles 2′ in dieser Bezugsposition. Die aus den Signalen der Detektoren 23 und 24 in dieser Weise jeweils gewonnenen Vergleichssignale werden dazu benutzt, während der Bewegung des Lichtstrahles 2′ von der Bezugsposition am Detektor 24 bis zur Position B in bekannter, nicht dargestellter Weise einer Impuls-Zähleinrichtung Impulse zuzuführen, die eine der Bewegungsgeschwindigkeit des Lichtstrahles 2′ proportionale Frequenz haben.

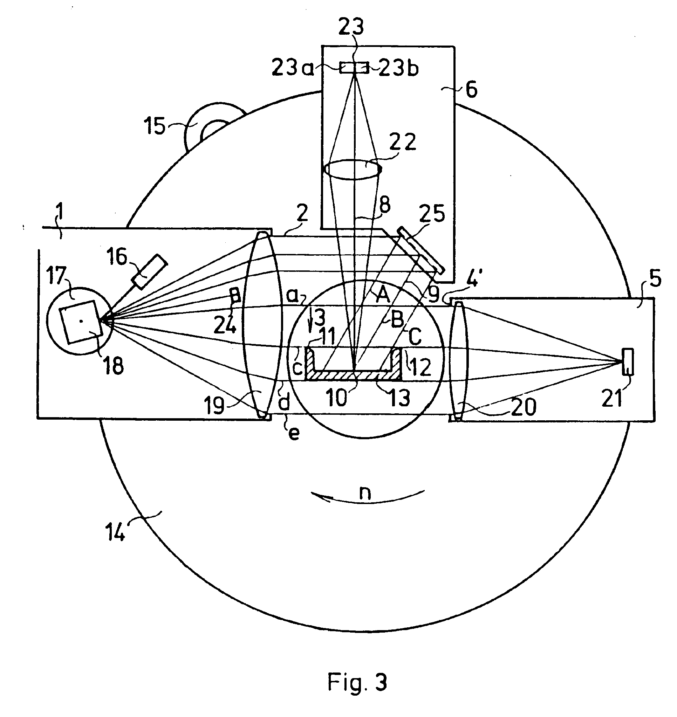

Die in Fig. 3 gezeigte Ausführungsform zeigt die zeitlich und räumlich versetzte Verwendung des einzigen Lichtstrahles 2 für die Abstandsmessung und für die Ermittlung der Bezugsgeraden. Auf einem Teil seines durch den Scanner 1 bewirkten Parallelverschiebungs-Weges erfährt der Lichtstrahl 2 nach Umlenkung durch ein optisches Umlenkmittel 25 eine solche Ausbreitungsrichtung und eine solche Bewegungsrichtung, in denen er den im Abstand zur Bezugsgeraden zu vermessenden Punkt 10 der Gegenstands-Oberfläche unter einem von der Achse der Abbildungs-Optik 22 abweichenden Winkel überstreicht. Wegen der strengen räumlichen und zeitlichen Zuordnung der so erreichten Bewegungsphasen des Lichtstrahles 2 ist es in dieser Ausführungsform möglich, während seiner Bewegung von der Position B bis zur Position c einer einzigen Impuls-Zähleinrichtung Impulse für die Bestimmung des Abstandes des Punktes 10 von der Achse des Lichtstrahles 2 in Position c zuzuführen, wobei notwendigerweise dafür gesorgt ist, daß für die Bewegung des Lichtstrahles 2 nach seiner Umlenkung am Umlenkmittel 25 über die Positionen A bis C gleiche Impulszahlen je in Richtung des optischen Weges 8 zurückgelegter Weg-Einheit für die Zählung erzeugt werden wie für seine vom Umlenkmittel 25 unbeeinflußte Bewegung über die Positionen a bis e. Dies wird in der in Fig. 3 gezeigten Ausführungsform dadurch erreicht, daß die Impulsfrequenz der zu zählenden Impulse bei Eintreffen des Lichtstrahles 2 in der durch den Detektor 24 erfaßten Bezugsposition beispielsweise vermittels eines nicht dargestellten umschaltbaren Frequenzteilers umgeschaltet wird.

Auf eine solche Umschaltung kann verzichtet werden, wenn abweichend von der in Fig. 3 getroffenen Darstellung das optische Umlenkmittel 25 aus einem Paar Littrow'scher Prismen in solcher anamorphotischer Anordnung gebildet ist, daß der Lichtstrahl 2 vor und nach der Umlenkung durch das Umlenkmittel 25 sich mit gleicher Geschwindigkeit in Richtung der mit dem optischen Weg 8 identischen Wirkungsachse des Abstandssensors 6 bewegt.

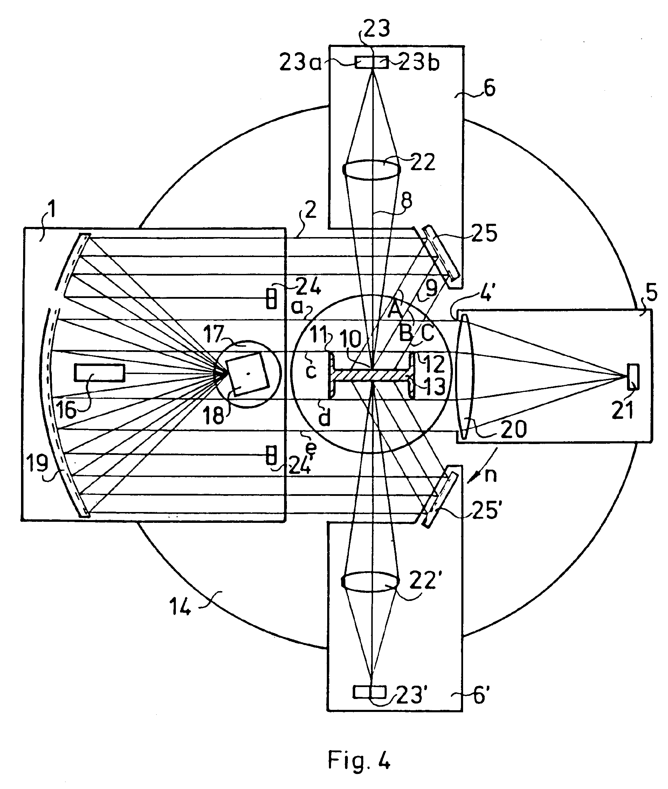

Die in Fig. 4 dargestellte Ausführungsform der Meßeinrichtung enthält einen weiteren Abstandssensor 6′, dessen Wirkungsweise jener des Abstandssensors 6 entspricht. Die diametrale Anordnung beider Abstandssensoren 6 und 6′ erlaubt die Vermessung weiterer Punkte der Oberfläche des zu untersuchenden Gegenstandes. So kann bei der dargestellten Verschwenkungslage der Schwenkhalterung 14 mit Bezug auf die Querschnitts-Orientierung des als **I**-Profil ausgebildeten Gegenstandes auch dessen Stegdicke im Punkt 10 senkrecht zur die Punkte 11 und 12 berührenden Bezugsgeraden vermessen werden. Die Vielfalt der durch die erfindungsgemäße Anordnung gegebenen Meßmöglichkeiten auch für andere Profilformen wird in Fig. 4 besonders deutlich bei Beachtung dessen, daß alle vom zu untersuchenden Gegenstand aufgrund seiner räumlichen Lage und Abmessungen hervorgerufenen Signaländerungen an den Detektoren 21, 23 und/oder 23′ mit sinnvollem gegenseitigen Bezug oder mit Bezug auf die Signaländerungen an den Detektoren 24 und/oder 24′ für Lage- und/oder Abstandsbestimmungen der jeweils abgestasteten Oberflächenpunkte des Gegenstandes herangezogen werden können.

## Patentansprüche

1. Optisch-elektrisches Meßverfahren zur Bestimmung von Querschnittsabmessungen insbesondere strangartiger Gegenstände mit Bezug auf mindestens eine an den Querschnittsumfang gelegte, diesen in mindestens zwei Punkten berührende Gerade, bei dem ein scharf gebündelter Lichtstrahl (2) innerhalb eines Meßfeldes im Sinne einer Parallverschiebung bewegt wird und dabei an meßbaren Stellen im Meßfeld Grenzen einer durch den im Meßfeld befindlichen zu untersuchenden Gegenstand (13) bewirkten Abschattung überschreitet,
dadurch gekennzeichnet,
daß durch den selben Lichtstrahl (2) nach einer Umlenkung (25) oder durch einen weiteren Lichtstrahl (2′) die Oberfläche des Gegenstandes (13) unter einem vorgegebenen Winkel, der deutlich vom Einfallswinkel des erstgenannten Lichtstrahles (2) abweicht, punktförmig beleuchtet und der Abstand der Achse des erstgenannten Lichtstrahles (2) an der Stelle einer bestimmten Grenze seiner Abschattung zu diesem beleuchteten Punkt (10) durch dessen Abbildung unter einem vom Beleuchtungswinkel abweichenden Winkel und Auswerten der Position seines Abbildes nach Gesetzen der Triangulation ermittelt wird;
daß durch Verschwenken des gesamten Meßsystems relativ zur Orientierung des Querschnittes des Gegenstandes und um eine zu dessen Längsachse parallele Achse der ermittelte Abstand einem Verlauf in Abhängigkeit von der Schwenklage des Meßsystemes unterzogen wird;
daß im Verlauf des Abstandes eine solche Unstetigkeit festgestellt wird, die für jene Schwenklage des Meßsystemes charakteristisch ist, bei der die Achse des erstgenannten Lichtstrahles (2) an der Stelle der bestimmten Abschattungs-Grenze den Querschnittsumfang in mindestens zwei voneinander beabstandeten Punkten (11 und 12) berührt;
und daß die Lage der Achse des erstgenannten Lichtstrahles (2) in Berührung der beabstandeten Punkte (11 und 12) als Bezugsgerade und der ermittelte Abstand als die zu bestimmende Querschnittsabmessung mit Bezug auf diese Bezugsgerade gewertet wird.

2. Einrichtung zur Durchführung des Verfahrens nach Anspruch 1, wobei auf einer um den zu untersuchenden Gegenstand (13) herum verschwenkbar gelagerten, mit einem Motor (15) antreibbaren Schwenkhalterung (14) auf einer Seite des Meßfeldes ein Scanner (1) für die Erzeugung eines im Sinne einer Parallelverschiebung in schneller Folge durch das Meßfeld bewegten Lichtstrahles (2), auf der anderen Seite des Meßfeldes ein optisch-elektrischer Empfänger (5) zum Empfang des vom Scanner erzeugten Lichtstrahles für die von dessen Abschattung abhängige Erzeugung elektrischer Signale, und ein mit seiner Wirkungsachse den Lichtstrahl im Meßfeld kreuzender an sich bekannter Abstandssensor (6) angeordnet sind, wobei die räumliche Lage des Abstandssensors (6) mit Bezug auf den Scanner (1) unveränderlich ist.

3. Einrichtung nach Anspruch 2, dadurch gekennzeichnet, daß der Abstandssensor (6) ein optisch-elektrischer Abstandssensor ist mit einer den Gegenstand (13) unter einer bestimmten Richtung punktförmig beleuchteten Lichtquelle sowie mit einer den beleuchteten Punkt (10) unter einer anderen Richtung auf ein positionsdektierendes optisch-elekrtisches Empfangselement (23) abbildenden Optik (22).

4. Einrichtung nach Anspruch 2, dadurch gekennzeichnet, daß der Abstandssensor ein scannendes Beleuchtungssystem (16′, 17′, 18′, 19′,) enthält, dessen Abtastlichtstrahl den Gegenstand (13) unter einem bestimmten Winkel beleuchtet und daß der Abstandssensor (6) weiter eine Oberflächenpunkte des Gegenstandes auf ein optisch-elektrisches Empfangselement (23) abbildende Optik (22) mit zur Richtung des Abstaststrahles des scannenden Beleuchtungssystems im Winkel orientierter optischer Achse (8) enthält.

5. Einrichtung nach Anspruch 4, dadurch gekennzeichnet, daß das scannende Beleuchtungssystem des Abstandssensors (6) in entsprechender Weise wie der erstgenannte Scanner eine Laserlichtquelle (16′), eine Drehspiegelanordnung (17′, 18′) und einen Kollimator (19′) enthält.

6. Einrichtung nach Anspruch 4, dadurch gekennzeichnet, daß das scannende Beleuchtungssystem des Abstandssensors (6) von den Abtastlichtstrahlen des erstgenannten Scanners überstrichene Umlenkmittel (25) enthält, derart, daß die Abtastlichtstrahlen nach Umlenkung die unter bestimmter Richtung den Gegenstand (13) beleuchtenden Abtastlichtstrahlen des scannenden Beleuchtungssystems des Abstandssensors (6) werden.

7. Einrichtung nach Anspruch 6, dadurch gekennzeichnet, daß als Umlenkmittel ein Planspiegel dient und daß zur Auswertung der Abtastung des Abstastlichtstrahls des erstgenannten Scanners die Zählung der Impulse einer Impulsquelle vorgenommen wird, deren Frequenz proportional zur Abtastbewegungsgeschwindigkeit des Abtastlichtstrahls des erstgenannten Scanners ist, während zur Auswertung der Abtastung des umgelenkten Abtastlichtstrahls der scannenden Beleuchtungseinrichtung des Abstandssensors (6) die Zählung der Impulse der oder einer Impulsquelle nach Frequenzumschaltung erfolgt.

8. Einrichtung nach Anspruch 6, dadurch gekennzeichnet, daß als Umlenkmittel littrow'sche Prismen in anamorphotischer Anordnung dienen, derart, daß die Abtastbewegungsgeschwindigkeit des Abtastlichtstrahls (2) des erstgenannten Scanners vor und nach der Umleitung gleich ist.

9. Einrichtung nach einem der Ansprüche 2 bis 8, dadurch gekennzeichnet, daß der Scanner (1) zur Herstellung eines festen Bezuges zwischen der jeweiligen Position seines Abtastlichtstrahles (2) zum Ausgangssignal des Abstandssensors (6) eine Bezugskante oder Bezugsfläche desselben abtastet.

10. Einrichtung nach einem der Ansprüche 3 bis 9, dadurch gekennzeichnet, daß das optisch-elektrische Empfangselement (23) des Abstandssensors (6) zwei Empfängerteile (23a, 23b) aufweist, die über eine Grenze getrennt sind, derart, daß durch Vergleich der Ausgangssignale der Empfängerteile die zu detektierende Position des von der Optik (22) erzeugten Bildes des beleuchteten Gegenstandspunktes ableitbar ist.

11. Einrichtung nach einem der Ansprüche 2 bis 10, dadurch gekennzeichnet, daß ein Scanner und dem ihm zugeordneten optisch-elektrischen Empfänger (5) in symmetrischer Anordnung einander gegenüberstehend zwei Abstandssensoren (6, 6′) zugeordnet sind, deren Wirkungsachse den Abtastlichtstrahl (2) des Scanners (1) im Meßfeld kreuzen.

## Claims

1. Optical-electrical measuring method for determining cross-sectional dimensions of particularly elongate articles with reference to at least one straight line which is applied to the periphery of the cross-section and contacts said periphery at at least two points, wherein a sharply defined light beam (2) is moved by a parallel displacement in a measuring field in such a manner that boudaries of a region which is vignetted in the measuring field by the article (13) to be examined are traversed by the light beam at measureable points in the measuring field, characterized in
that the same light beam (2) after it has been deflected (25) or another light beam (2′) is used to illuminate the surface of the article (13) at a point at a determined angle deviating substantially from the angle of incidence of the first-mentioned light beam (2), and the distance from the axis of the first-mentioned light beam (2) at a predetermined boundary of its vignetted region to that illuminated point is determined in that an image of that point is formed at an angle which differs from the angle of the illumination and the position of said image is evaluated by triangulation;
that the entire measuring system is pivotally moved relative to the orientation of the cross-section of the article about an axis which is parallel to the longitudinal axis of the article so that the thus determined distance is changed in dependence on the angular position of the measuring system;
that a discontiuity which is characteristic of a certain angular position of the measuring system is detected in the change of the distance, namely, that position in which the axis of the first-mentioned light beam (2) at the location of the predetermined boundary of the vignetted region contacts the periphery of the cross-section at at least two spaced apart points (11 and 12); and
that the position of the axis of the first-mentioned light beam (2) in contact with the spaced apart points (11 and 12) is regarded as the straight reference line and the determined distance is regarded as the cross-sectional dimension which is to be determined with reference to that reference line.

2. Apparatus for carrying out the method according to claim 1, whereby, on a swivel mount (14), which is pivotally movable about the article (13) to be examined and is adapted to be driven by a motor (15), there are provided a scanner (1) arranged on that swivel mount on one side of the measuring field and serving for generating a light beam (2), which is rapidly moved through the measuring field by a parallel displacement, an optical-electrical receiver (5) mounted on the swivel mount on the other side of the measuring field and serving for receiving the light beam generated by the scanner and for generating electric signals in dependence on the vignetting of the light beam, and a distance sensor (6), known per se, also mounted on said swivel mount on said other side of the measuring field and having a line of action which crosses the light beam in the measuring field, the spatial position of the distance sensor (6) relative to the scanner (1) being invariable.

3. Apparatus according to claim 2, characterized in that the distance sensor (6) is an optical-electrical distance sensor and comprises a light source for illuminating the article (13) at a point in a predeterminated direction and an optical system (22) for forming an image of the illuminated point (10) in another direction on a position-detecting optical-electrical receiving element (23).

4. Apparatus according to claim 2, characterized in that the distance sensor comprises a scanning illuminating system (16′, 17′, 18′, 19′), the scanning light beam of which illuminates the artcle (13) at a predeterminated angle, and the distance sensor (6) further comprises an optical system (22), which forms images of points of the surface of the article on an optical-electrical receiving element (23) and has an optical axis (8), which is oriented at an angle to the direction of the scanning beam of the scanning illuminating system.

5. Apparatus according to claim 4, characterized in that the scanning illuminating system of the distance sensor (6) like the first-mentioned scanner, comprises a laser light source (16′), a rotating mirror assembly (17′, 18′), and a collimator (19′).

6. Apparatus according to claim 4, characterized in that the scanning illuminating system of the distance sensor (6) comprises deflecting means (25), which are traversed by the scanning light beams of the first-mentioned scanner in such a manner that the scanning light beams, after having been deflected, constitute the scanning light beams of the illumination system of the distance sensor (6) illuminating the article (13) in a predetermined direction.

7. Apparatus according to claim 6, characterized in that the deflecting means consist of a plane mirror, that the scanning by the scanning light of the first-mentioned scanner is evaluated by a counting of pulses from a pulse source, which pulses have a frequency that is proportional to the velocity of the scanning movement of the scanning light beam of the first-mentioned scanner and that the scanning of the deflected scanning light beam of the scanning illumination means of the distance sensor (6) is evaluated in that the pulses of the or a pulse source are counted after a switched frequency change.

8. Apparatus according to claim 6, characterized in that the deflecting means consist of Littrow prisms provided in an anamorphotic arrangement in such a manner that the scanning light beam (2) of the first-mentioned scanner is performed at the same velocity before and after the deflection.

9. Apparatus according to any of claims 2 to 8, characterized in that the scanner (1) scans a reference edge or reference surface of the distance sensor (6) in order to establish a fixed relation between the instantaneous position of the scanning light beam (2) of the scanner (1) and the output signal of the distance sensor (6).

10. Apparatus according to any of claims 3 to 9, characterized in that the optical-electrical receiving element (23) of the distance sensor (6) comprises two receiver portions (23a, 23b), which are separated by a boudary in such a manner that the position of the image of the illuminated point of the article, which image is generated by the optical system (22) and which position is to be detected, can be derived from a comparison of the output signals of the receiver portions.

11. Apparatus according to any of claims 2 to 10, characterized in that two mutually opposite distance sensors (6, 6′) are provided, which are symmetrically coordinated with the scanner and the optical-electrical receiver (5) associated with said scanner and have lines of action that cross the scanning light beam (2) of the scanner (1) in the measuring field.

## Revendications

1. Procédé de mesure opto-électrique servant à déterminer les dimensions de la section transversale d'objets notamment allongés par rapport à au moins une ligne droite tracée à la périphérie de la section transversale et touchant celle-ci en au moins deux points, avec lequel un rayon lumineux (2) fortement focalisé est déplacé à l'intérieur d'un champ de mesure dans le sens d'un déplacement parallèle et franchit lors de ce déplacement, en des points mesurables dans le champ de mesure, les limites d'une ombre provoquée par l'objet (13) à étudier se trouvant dans le champ de mesure,
ce procédé étant caractérisé en ce que la surface de l'objet (13) est éclairée de manière ponctuelle, par le même rayon lumineux (2) après une déviation (25) ou par un second rayon lumineux (2′), sous un angle prédéfini qui diffère nettement de l'angle d'incidence du premier rayon lumineux (2) cité,
et en ce que la distance de l'axe du premier rayon lumineux (2) cité à l'endroit d'une limite déterminée de son ombre par rapport à ce point éclairé (10) est déterminée au moyen de la représentation de ce dernier sous un angle différant de l'angle d'éclairage et grâce à l'analyse de la position de son image selon les lois de la triangulation;
en ce que, en raison du pivotement de l'ensemble du système de mesure par rapport à l'orientation de la section transversale de l'objet et autour d'un axe parallèle à l'axe longitudinal de celui-ci, la distance déterminée est soumise à une évolution dépendant de la position de pivotement du système de mesure;
en ce que l'on constate, dans l'évolution de la distance, une discontinuité qui est caractéristique de ladite position de pivotement du système de mesure dans laquelle l'axe du premier rayon lumineux (2) cité touche la périphérie de la section transversale, à l'endroit de la limite déterminée de l'ombre, en au moins deux points (11 et 12) situés à une distance l'un de l'autre;
et en ce que la position de l'axe du premier rayon lumineux (2) cité, lorsqu'il touche les points (11 et 12) situés à distance l'un de l'autre, est considérée comme droite de référence et en ce que la distance déterminée est évaluée comme étant la dimension de la section transversale à déterminer par rapport à cette droite de référence.

2. Dispositif pour exécuter le procédé selon la revendication 1, dans lequel sont disposés, sur un support pivotant (14) pouvant être commandé par un moteur (15) et monté de manière pivotante autour de l'objet (13) à étudier, un scanner (1), sur un côté du champ de mesure, pour la production d'un rayon lumineux (2) déplacé en séquence rapide, dans le sens d'un déplacement parallèle, à travers le champ de mesure, un récepteur opto-électrique (5), sur l'autre côté du champ de mesure, pour la réception du rayon lumineux produit par le scanner et la production de signaux électriques en fonction de l'ombre de celui-ci, et un détecteur de distance (6), connu en soi, dont l'axe d'action coupe le rayon lumineux dans le champ de mesure, la position dans l'espace du détecteur de distance (6) étant invariable par rapport au scanner (1).

3. Dispositif selon la revendication 2, caractérisé en ce que le détecteur de distance (6) est un détecteur de distance opto-électrique comportant une source lumineuse qui éclaire l'objet (13) de manière ponctuelle dans une direction déterminée ainsi qu'un objectif (22) reproduisant, dans une autre direction et sur un élément récepteur opto-électrique (23) détectant la position, le point (10) éclairé.

4. Dispositif selon la revendication 2, caractérisé en ce que le détecteur de distance contient un système d'éclairage (16′, 17′, 18′, 19′) à balayage par scanner, dont le faisceau lumineux explorateur éclaire l'objet (13) sous un angle déterminé, et en ce que le détecteur de distance (6) contient encore un objectif (22) qui reproduit des points de la surface de l'objet sur un élément récepteur opto-électrique (23) et dont l'axe optique (8) est orienté angulairement en direction du faisceau explorateur du système d'éclairage à balayage par scanner.

5. Dispositif selon la revendication 4, caractérisé en ce que le système d'éclairage à balayage par scanner du détecteur de distance (6) contient, de manière correspondante au premier scanner cité, une source lumineuse laser (16′), un arrangement de miroirs tournants (17′, 18′) et un collimateur (19′).

6. Dispositif selon la revendication 4, caractérisé en ce que le système d'éclairage à balayage par scanner du détecteur de distance (6) contient un moyen de déviation (25) balayé par les faisceaux lumineux explorateurs du premier scanner cité, de sorte que ces faisceaux lumineux explorateurs deviennent, après déviation, les faisceaux lumineux explorateurs du système d'éclairage à balayage par scanner du détecteur de distance (6) éclairant l'objet (13) dans une direction déterminée.

7. Dispositif selon la revendication 6, caractérisé en ce que l'on utilise un miroir plan comme moyen de déviation et en ce que, pour analyser l'exploration du faisceau lumineux explorateur du premier scanner cité, on entreprend le comptage des impulsions d'une source d'impulsions dont la fréquence est proportionnelle à la vitesse du mouvement d'exploration du faisceau lumineux explorateur du premier scanner cité tandis que, pour analyser l'exploration du faisceau lumineux explorateur dévié du dispositif d'éclairage à balayage par scanner du détecteur de distance (6), on procède au comptage des impulsions de la source d'impulsions ou d'une source d'impulsions après changement de la fréquence.

8. Dispositif selon la revendication 6, caractérisé en ce que l'on utilise, comme moyen de déviation, des prismes de Littrow agencés de manière anamorphotique, de manière à ce que la vitesse du mouvement d'exploration du faisceau lumineux explorateur (2) du premier scanner cité soit identique avant et après la déviation.

9. Dispositif selon l'une des revendications 2 à 8, caractérisé en ce que, pour établir une relation fixe entre la position respective de son faisceau lumineux explorateur (2) et le signal de sortie du détecteur de distance (6), le scanner (1) explore une arête de référence ou une surface de référence de ce dernier.

10. Dispositif selon l'une des revendications 3 à 9, caractérisé en ce que l'élément récepteur opto-électrique (23) du détecteur de distance (6) comporte deux parties réceptrices (23a, 23b) qui sont séparées par une limite, de manière à ce que, par comparaison des signaux de sortie des parties réceptrices, on puisse déduire la position à détecter de l'image du point de l'objet éclairé produite par l'objectif (22).

11. Dispositif selon l'une des revendications 2 à 10, caractérisé en ce que deux détecteurs de distance (6, 6′), disposés symétriquement en regard l'un de l'autre, sont adjoints à un scanner et au récepteur opto-électrique (5) lui correspondant, leurs axes d'action coupant le faisceau lumineux explorateur (2) du scanner (1) dans le champ de mesure.
